Europäisches Patentamt

(19) European Patent Office

Office européen des brevets

(11) Publication number: **0 021 570**
**B1**

(12) **EUROPEAN PATENT SPECIFICATION**

(45) Date of publication of patent specification: 05.10.83    (51) Int. Cl.³: **C 02 F 3/22**

(21) Application number: **80301470.3**

(22) Date of filing: **06.05.80**

(54) Process and apparatus for the treatment of waste water.

<table>
<tr><td>

(30) Priority: **23.05.79 GB 7917971**

(43) Date of publication of application:
**07.01.81 Bulletin 81/1**

(45) Publication of the grant of the patent:
**05.10.83 Bulletin 83/40**

(84) Designated Contracting States:
**BE DE FR GB IT NL SE**

(56) References cited:
**FR - A - 2 328 503**
**US - A - 2 374 772**

</td><td>

(73) Proprietor: **IMPERIAL CHEMICAL INDUSTRIES PLC**
**Imperial Chemical House Millbank**
**London SW1P 3JF (GB)**

(72) Inventor: **Hines, David Albert**
**10 Town Farm Close Bishopton**
**Stockton-on-Tees Cleveland (GB)**
Inventor: **Bolton, David Hugh**
**17 The Crescent Linthorpe**
**Middlesbrough Cleveland (GB)**

(74) Representative: **Hall, Robert et al,**
**Imperial Chemical Industries plc Legal**
**Department - Patents Thames House North;**
**Millbank**
**London SW1P 4QG (GB)**

</td></tr>
</table>

Courier Press, Leamington Spa, England

# Process and apparatus for the treatment of waste water

This invention relates to the treatment of liquid-borne biologically-degradable waste material, hereinafter referred to as wastewater which term is to be understood to include all types of biologically degradable domestic and industrial waste materials, for example normal domestic sewage, the effluents produced by farms, food factories and other industries producing such waste.

The methods generally employed in the treatment of wastewater comprise essentially a primary treatment by physical methods such as screening and sedimentation to remove large suspended solids followed by a secondary treatment by biological methods to remove organic materials. The present invention relates to a secondary treatment stage.

One method for the treatment of wastewater is described in out EP—A—13819 and comprises circulating the wastewater around a system having a downcomer and a riser communicating directly with each other at their lower ends, and via pump means at their upper ends, supplying a gas containing free oxygen into the wastewater as it passes down the downcomer, and pumping the wastewater up from the top of the riser back into the downcomer with gas disengagement prior to delivery of the wastewater to the downcomer to maintain a level of wastewater in the downcomer above the level of wastewater in the riser in order to provide a hydrostatic pressure head which causes flow of the wastewater down the downcomer and into the riser at a rate suficient to entrain substantially all of the gas supplied to the wastewater as it passes down the downcomer.

Preferably the upper portion of the riser is of enlarged cross section, thus forming a basin in which most of the gas bubbles become disengaged from the wastewater and escape to the atmosphere before the wastewater reaches the pump. It is stressed that although it is necessary to disengage gas bubbles from the wastewater before it is pumped back into the downcomer, it is not essential to provide a basin for this purpose. If the pump is of a suitable type, e.g. an archimedean screw pump, gas disengagement will occur if the wastewater is pumped directly from the top of the riser back into the downcomer.

The pump may be of any type suitable for pumping the wastewater from the basin up and back into the downcomer. Examples of suitable pumps are centrifugal pumps, axial flow pumps, and positive displacement pumps, for example archimedian screw pumps. The latter have the added advantage of causic further disengagement of gas bubbles from the wastewater and of not shearing flocs.

Under completely stable operating conditions, the level of the wastewater in the downcomer would be at a substantially constant height above the level of the wastewater in the basin, so that there would be a substantially constant hydrostatic pressure difference or pressure head between the two, which would cause the wastewater to flow down the downcomer and up the riser at a substantially constant rate. However, as described in our EP—A—13819, we have found that, in general, completely stable operating conditions do not occur and that there are temporary fluctuations in the pressure head, associated with temporary fluctuations in the pressure head, associated with temporary fluctuations in the rate of flow of the wastewater around the apparatus; these fluctuations usually rectify themselves and cause no undue disturbance of the flow pattern, so that the operating conditions can be fairly described as normal.

Let us suppose that the level of the wastewater in the downcomer is at a level A—A and the rate of flow of wastewater around the system, starts to decrease due to a random fluctuation of some kind. This increases the voidage (i.e. the proportion of air by volume in the air/liquid mixture) in the downcomer and further slows down the rate of flow of the wastewater around the system. While this slowing-down process is taking place, however, the level of the wastewater in the top of the downcomer is gradually rising from its original level A—A, with a corresponding increase in the hydrostatic pressure head (since the flow rate around the system is slower and the pump is continuing to pump water into the top of the downcomer) until it reaches a level, for example B—B, where the increased hydrostatic pressure head is sufficient to speed up the wastewater flow rate and restore it to its original value. Once this has been done, the wastewater level will gradually sink back from B—B to its original level A—A.

On the other hand, let us suppose that for some reason the wastewater flow rate starts to increase beyond its original rate. In this case, the level A—A will begin to fall, with a corresponding decrease in the hydrostatic pressure head, until it reaches a new level, for example C—C, at which point the hydrostatic pressure head is so reduced that the wastewater flow rate is slowed down again to its original value. One this has been done, the wastewater level will gradually rise from C—C to its original level A—A. From the foregoing it will be understood that the levels A—A, B—B and C—C represent respectively the mean, the maximum and the minimum levels in the downcomer under normal operating conditions — that is to say that between the levels B—B and C—C fluctuations in the flow rate will rectify themselves without outside assistance. It will be appreciated that these levels will be different for any two different wastewater treatment systems and will depend upon a large number of different factors including, for example, the rates for which the apparatus is designed, the characteristics of the pump, the characteristics of the wastewater to be treated, and many other factors. These means, maximum and minimum levels can be determined for each wastewater treatment system.

The wastewater has to be pumped up from the top of the riser and delivered back into the downcomer at a position above the level of the wastewater in the downcomer.

The power costs for driving the pump are a major factor in the cost of operating the system. Therefore, in the interests of economy, the wastewater is desirably pumped to a level that is not substantially higher than that required to achieve the desired rate of flow of wastewater around the system. Hence in order to maintain normal circulation of wastewater and air around the system at the flow rate for which the system was designed, the pump must be capable of delivering wastewater back into the downcomer at a level at least as high as the highest level B—B to which the wastewater in the downcomer can fluctuate during normal operation of the system.

Any particular wastewater treatment plane will be designed to treat a range of effluents over a range of rates. Thus at certain times the plane may be carrying out its heaviest duty at its maximum capacity, i.e. its maximum design load. At other times, however, it will be carrying out less than its heaviest duty at less than its maximum capacity, i.e. operating at a reduced load. When operating at a load that is less than the maximum design load, the highest level B'—B' of the fluctuations of the wastewater in the downcomer will be at a lower level than when operating at the maximum design load. In this case it would be wasteful to pump the wastewater back into the downcomer at the highest point B—B when it is only necessary to do so at B'—B'.

In the present invention the position at which the wastewater is delivered to the downcomer is variable so that, when the system is operating at a load that is less than the design maximum load, the position at which the wastewater is delivered to the downcomer can be lowered from that necessary when operating at the design maximum load.

Accordingly the present invention provides a method for the treatment of wastewater comprising circulating wastewater around a system having a downcomer and a riser communicating directly with each other at their lower ends and via pumping means at their upper ends, supplying a gas containing free oxygen into the wastewater as it passes down the downcomer, and pumping the wastewater up from the top of the riser back into the downcomer with gas disengagement prior to delivery of the wastewater to the downcomer to maintain a level of wastewater in the downcomer above the level of the wastewater in the riser in order to provide a hydrostatic pressure head which causes the flow of wastewater down the downcomer and into the riser at a rate sufficient to entrain substantially all of the gas supplied to the wastewater as it passes down the downcomer, said hydrostatic pressure head being subject to fluctuations, during normal operation of the system, between an upper and a lower level, the height in said downcomer of said upper level being dependent on the operating load on the system and, within the design limits of the system, being greatest when said operating load is at its design maximum, said wastewater being delivered to the downcomer at a position above the upper level of the fluctuations of the pressure head, the position at which said wastewater is delivered to said downcomer being variable and being lower, when the system is operating at a load that is less than the design maximum load, than that position at which the wastewater is delivered to the downcomer when the system is operating at said maximum design load.

The present invention further provides apparatus for the treatment of wastewater comprising a downcomer and a riser communicating directly with each other at their lower ends, means for supplying a gas containing free oxygen to the wastewater as it passes down the downcomer, means for pumping up the wastewater from the top of the riser to the downcomer to maintain a level of wastewater in said downcomer above the level of wastewater in said riser to provide a sufficient hydrostatic pressure head of wastewater in said downcomer to cause flow of wastewater down the downcomer and into the riser at a rate sufficient to entrain substantially all of the gas supplied to the wastewater as it passes down the downcomer, said pumping means delivering the wastewater to the downcomer at a level above the level of wastewater in the downcomer, means, which may be said pumping means, to disengage gas from said wastewater prior to return of said wastewater to said downcomer, the level of the position at which the wastewater is delivered to the downcomer being variable.

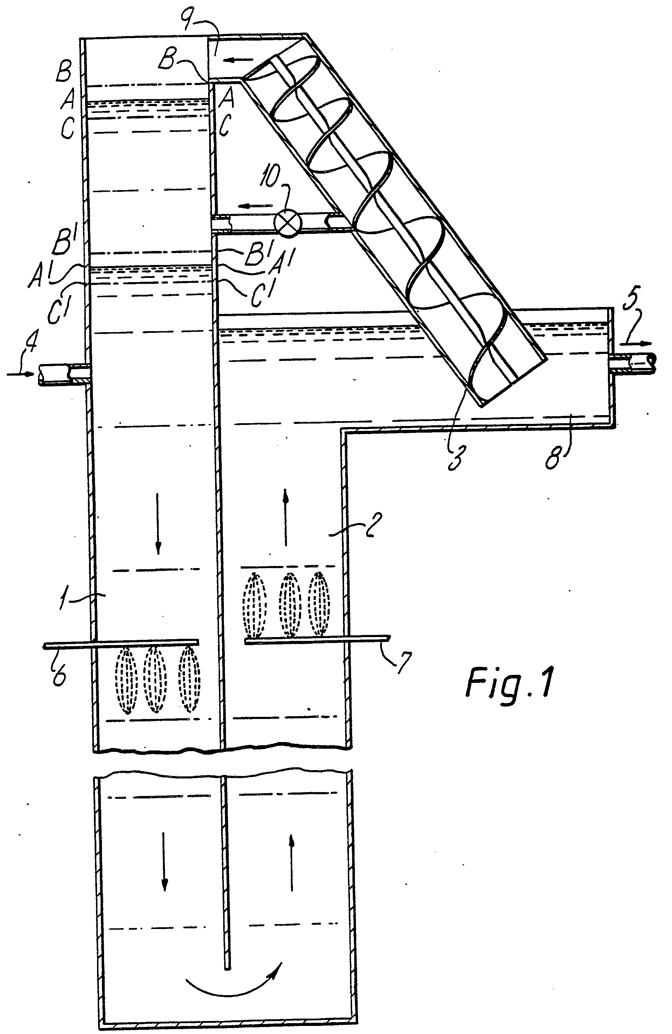

The invention is illustrated by reference to Figure 1 which shows, diagramatically, an example of apparatus suitable for use in the present invention.

The apparatus comprises a downcomer 1, a riser 2, and an archimedean screw pump 3 which recirculates wastewater from the top of the riser 2 back into the downcomer 1 near the top thereof.

Wastewater to be treated is introduced into the apparatus (preferably into the downcomer 1) at any desired rate at a convenient point 4 and, after being recirculated around the apparatus many times, treated wastewater is removed from the apparatus at substantially the same rate at any convenient point 5.

A gas containing free oxygen (for example air) is introduced into the downcomer 1 at such a rate and at any convenient point such that it is substantially all entrained by the downwardly flowing wastewater. Preferably the gas is introduced into the downcomer 1 at a point 6 between about one-tenth and six-tenths of the length of the downcomer measured from the surface of the wastewater therein. A gas containing free oxygen, for example air, may also be introduced into the riser 2, for example at 7.

The top of the riser 2 is of enlarged cross section, forming a basin 8 in which most of the gas bubbles become disengaged from the wastewater and escape to the atmosphere before the wastewater reaches pump 3.

The shaft, i.e. downcomer and riser, had a depth of 80 metres and was designed for treating domestic sewage including industrial components and so that the wastewater had an optimum mean velocity around the shaft of 0.6 m/sec, and, at maximum load, a minimum head of 2.6 metres (that is to say, the height of the level C—C above the level of the wastewater in the basin 8), and a maximum head of 3.1 metres (that is to say, the height of the level B—B above the level of the wastewater in the basin 8). The fluctuations of the level A—A therefore had an amplitude of 0.5 metres.

The pump 3 pumps the wastewater from the basin 8 at the top of the riser 2 up and back into the downcomer at 9. The position 9 at which the wastewater re-enters the downcomer from the pump 3 is located above the level B—B, which is the highest level to which the wastewater in the downcomer can fluctuate during normal operation at maximum design load. There is therefore a break in the flow of the wastewater between the re-entry position 9 and the level of the wastewater in the downcomer. The wastewater may be allowed to fall freely as a waterfall from 9. Such free-fall of the wastewater will cause it to entrain air, which is undesirable; therefore the wastewater is preferably caused to flow from 9 to the level of the wastewater in the downcomer through means which inhibit the entrainment of air, for example down a spiral chute (not shown).

The pump is provided with a line having a valve 10, which can be opened, when operating at a reduced load, when the mean level is at A'—A' so that the pump then delivers wastewater through 10 at a level just above B'—B'. The changeover from using the whole of the pump 3 to using only the bottom end thereof (and vice versa) can be effected manually as and when desired; or it may be effected by a time switch (not shown), if it is known in advance when the change from level A—A to A'—A' (or vice versa) is going to take place — as in the case of installations for treating domestic sewage; or it may be effected by means (not shown) responsive to signals derived from the level of the wastewater in the downcomer, such that when it sinks below the level B' and B' the valve 10 is opened and when it rises above the level B' and B' the valve 10 is closed. Since the level of the wastewater in the downcomer is a function of the amount of oxygen-containing gas being supplied to the apparatus, the opening and closing of the valve 10 may be operated by a signal responsive to an increase or decrease in this parameter. There may be a plurality of such valved lines located between the top of the pump 3 and the illustrated valve line so that the wastewater may be removed from the pump into the downcomer at a plurality of different levels depending upon the type of duty the apparatus is carrying out.

An alternative (not illustrated) would be to have two separate pumps 3, one delivering wastewater into the downcomer just above the level B—B, and the other delivering wastewater into the downcomer just above the level $B^1$—$B^1$, with means for starting and stopping them alternately. Self-evidently there may be additional pumps delivering wastewater into the downcomer at levels intermediate B—B and $B^1$—$B^1$.

## Claims

1. A method for the treatment of wastewater comprising

(i) circulating wastewater around a system having a downcomer and a riser communicating directly with each other at their lower ends and via pumping means at their upper ends,

(ii) supplying a gas containing free oxygen into the wastewater as it passes down the downcomer, and

(iii) pumping the wastewater up from the top of the riser back into the downcomer with gas disengagement prior to delivery of the wastewater to the downcomer to maintain a level of wastewater in the downcomer above the level of wastewater in the riser in order to provide a hydrostatic pressure head which causes flow of wastewater down the downcomer and into the riser at a rate sufficient to entrain substantially all of the gas supplied to the wastewater as it passes down the downcomer, said hydrostatic pressure head being subject to fluctuations, during normal operation of the system, between an upper and a lower level, the height in said downcomer of said upper level being dependent on the operating load on the system and, within the design limits of the system, being greatest when said operating load is at its design maximum, said wastewater being delivered to the downcomer at a position above the upper level of the fluctuations of the pressure head, the position at which said wastewater is delivered to said downcomer being variable and being lower, when said system is operating at a load that is less than the design maximum load, than that position at which the wastewater is delivered to the downcomer when the system is operating at said maximum design load.

2. A method as claimed in claim 1, wherein the pumped wastewater is allowed to fall freely from its point of delivery to the downcomer into the wastewater contained therein.

3. A method as claimed in claim 1 wherein the pumped wastewater falls from its point of delivery to the downcomer into the wastewater contained therein through means which inhibits the entrainment of air.

4. A method according to any one of claims 1 to 3 wherein the position at which the wastewater is delivered to the downcomer is varied in response to variation of the level of the wastewater in the downcomer.

5. A method according to any one of claims 1 to 3 wherein the level of wastewater in the downcomer is dependent on the quantity of oxygen containing gas supplied to the system and the position at which the wastewater is delivered to the downcomer is varied in response to variation in said quantity of gas.

6. An apparatus for the treatment of wastewater, comprising a downcomer (a) and a riser (2) communicating directly with each other at their lower ends, means (6) for supplying a gas containing free oxygen to the wastewater as it passes down the downcomer (1), means (3) for pumping up the wastewater from the top of the riser (2) to the downcomer (1) to maintain a level of wastewater in said downcomer (1) above the level of wastewater in said riser (2) to provide a sufficient hydrostatic pressure head of wastewater in said downcomer (1) to cause flow of wastewater down the downcomer (1) and into the riser (2) at a rate sufficient to entrain substantially all the gas supplied to the wastewater as it passes down the downcomer (1), said pumping means (3) delivering the wastewater to the downcomer (1) at a level above the level of wastewater in the downcomer (1), means, which may be said pumping means, to disengage gas from said wastewater prior to return of said wastewater to said downcomer, the level of the position at which the wastewater is delivered to the downcomer (1) being variable.

7. An apparatus as claimed in claim 6, including means which inhibits the entrainment of air through which the pumped wastewater falls from its point of delivery to the downcomer into the wastewater contained therein.

8. An apparatus as claimed in claim 7, wherein the said means is a spiral chute.

9. An apparatus as claimed in any one of claims 6 to 8 characterised by actuating means, responsive to the level of wastewater in the downcomer (1), to actuate means (10) to vary the position at which the wastewater is delivered to the downcomer (1).

10. An apparatus as claimed in any one of claims 6 to 8 characterised by actuating means, responsive to the quantity of gas supplied to the system to actuate means (10) to vary the position at which the wastewater is delivered to the downcomer (1).

## Revendications

1. Procédé pour le traitement d'eau résiduaire, suivant lequel:

(i) on fait circuler de l'eau résiduaire dans un système comportant une colonne de descente et une colonne de montée communiquant directement l'une avec l'autre à leurs extrémitées inférieures et, par l'intermédiaire d'un moyen de pompage à leurs extrémités supérieures,

(ii) on introduit un gaz contenant de l'oxygène libre dans l'eau résiduaire lorsqu'elle descend dans la colonne de descente, et

(ii) on pompe l'eau résiduaire vers le haut à partir de l'extrémité supérieure de la colonne de montée dans la colonne de descente en prévoyant un dégagement de gaz avant que l'eau résiduaire parvienne dans le colonne de descente pour maintenir, dans la colonne de descente, un niveau d'eau résiduaire situé au-dessus du niveau de l'eau résiduaire dans la colonne de montée afin de produire une charge de pression hydrostatique qui force l'eau résiduaire à descendre dans la colonne de descente et à pénétrer dans la colonne de montée à une allure suffisante pour entraîner en substance la totalité du gaz introduit dans l'eau résiduaire lorsqu'elle descend dans la colonne de descente, la charge de pression hydrostatique variant, pendant un fonctionnement normal du système, entre un niveau supérieur et un niveau inférieure, la hauteur dans la colonne de descente du niveau supérieure dépendant de la charge de travail du système et, dans les limites nominales du système, étant maximum lorsque la charge de travail est à son maximum nominal, l'eau résiduaire étant introduite dans la colonne de descentes à un endroit situé au-dessus du niveau supérieur des variations de la charge hydrostatique,

l'endroit où l'eau résiduaire est introduite dans la colonne de descente étant variable et étant moins élevé, lorsque le système travaille à une charge inférieure à sa charge nominale maximum, que l'endroit où elle est introduite dans cette colonne de descente lorsque le système fonctionne à sa charge nominale maximum.

2. Procédé suivant la revendication 1, dans lequel l'eau résiduaire pompée peut tomber en chute libre à partir de son point de débit dans la colonne de descente, dans l'eau résiduaire y contenue.

3. Procédé suivant la revendication 1, dans lequel l'eau résiduaire pompée tombe à partir de son point de débit dans la colonne de descente dans l'eau résiduaire y contenue en passant par un moyen qui empêche l'entraînement d'air.

4. Procédé suivant l'une quelconque des revendications 1 à 3, dans lequel l'endroit où l'eau résiduaire est introduite dans la colonne de descente varie en réaction à une variation du niveau de l'eau résiduaire dans la colonne de descente.

5. Procédé suivant l'une quelconque des revendications 1 à 3, dans lequel le niveau de l'eau résiduaire dans la colonne de descente dépend de la quantité de gaz contenant de l'oxygène introduite dans le système et l'endroit où l'eau résiduaire est introduite dans la colonne de descente varie en réaction à une variation de cette quantité de gaz.

6. Appareil pour le traitement d'eau résiduaire comprenant une colonne de descente (1) et une colonne de montée (2) communiquant directement l'une avec l'autre à leurs extrémités inférieures, un dispositif (6) pour introduire un gaz contenant de l'oxygène libre dans l'eau résiduaire lorsqu'elle descend dans la colonne de descente (1), un dispositif (3) pour pomper l'eau, résiduaire à partir de l'extrémité supérieure de la colonne de montée (2) dans la colonne de descente (1), afin de maintenir, dans la colonne de descente (1), un niveau d'eau résiduaire situé au-dessus du niveau de l'eau résiduaire dans la colonne de montée (2) pour produire, dans la colonne de descente (1), une charge de pression hydrostatique d'eau résiduaire suffisante pour forcer l'eau résiduaire à descendre dans la colonne de descente (1) et à pénétrer dans la colonne de montée (2) à une vitesse suffisante pour entraîner en substance tout le gaz introduit dans l'eau résiduaire lorsqu'elle descend dans la colonne de descente (1), le moyen de pompage (3) introduisant l'eau résiduaire dans la colonne de descente (1) à une niveau situé au-dessus de celui de l'eau résiduaire dans la colonne de descente (1), un moyen, qui peut être le moyen de pompage, étant prévu pour assurer le dégagement du gaz de l'eau résiduaire avant le retour de l'eau résiduaire dans la colonne de descente, le niveau de l'endroit où l'eau résiduaire est introduite dans la colonne de descente (1) étant variable.

7. Appareil suivant la revendication 6 comprenant un moyen qui empêche l'entraînement d'air par lequel l'eau résiduaire pompée tombe à partir de son point de débit dans la colonne de descente, dans l'eau résiduaire y contenue.

8. Appareil suivant la revendication 7, une lequel le dit moyen est une goulotte hélicoïdale.

9. Appareil suivant l'une quelconque des revendications 6 à 8, caractérisé par une dispositif d'actionnement réagissant au niveau de l'eau résiduaire dans la colonne de descente (1) pour actionner un dispositif (10) servant à modifier l'endroit où l'eau résiduaire est débitée dans la colonne de descente (1).

10. Appareil suivant l'une quelconque des revendications 6 à 8, caractérisé par un dispositif d'actionnement réagissant à la quantité de gaz introduite dans le système pour actionner un dispositif (10) en vue de modifier l'endroit où l'eau résiduaire est débitée dans la colonne de descente (1).

Patentansprüche

1. Verfahren zur Behandlung von Abwasser, bei dem man

(i) Abwasser im Kreislauf um ein System mit einem Fallrohr und einem Steigrohr, die an ihren unteren Enden direkt und an ihren oberen Enden über eine Pumpeinrichtung miteinander verbunden sind, herumführt,

(ii) in das Abwasser ein Gas, das freien Sauerstoff enthält, einleitet, während das Abwasser im Fallrohr nach unten strömt, und

(iii) das Abwasser vom Oberteil des Steigrohrs herauf- und in das Fallrohr zurückpumpt, wobei Gas freigegeben wird bzw. entweicht, bevor das Abwasser dem Fallrohr zugeführt wird, um in dem Fallrohr einen Abwasserspiegel, der über dem Abwasserspiegel in dem Steigrohr liegt, aufrechtzuerhalten und dadurch ein hydrostatisches Druckgefälle hervorzurufen, durch das bewirkt wird, daß Abwasser mit einer Geschwindigkeit, die ausreicht, um im wesentlichen das ganze Gas, das dem Abwasser zugeführt wird, wahrend das Abwasser in Fallrohr nach unten strömt, mitzureißen, in dem Fallrohr nach unten strömt und in das Steigrohr hineinströmt, wobei das hydrostatische Druckgefälle während des normalen Betriebs des Systems Schwankungen zwischen einem oberen und einem unteren Niveau unterworfen ist, wobei die Höhe des oberen Niveaus in dem Fallrohr von der Betriebsbelastung des Systems abhängig ist und — innerhalb der Bemessungsgrenzen des Systems — am größten ist, wenn die Betriebsbelastung ihren zulässigen Höchstwert hat, wobei das Abwasser dem Fallrohr an einer über dem oberen Niveau der Schwankungen des Druckgefälles befindlichen Stelle zugeführt wird, wobei die Stelle, an der das Abwasser dem Fallrohr zugeführt wird, veränderlich ist und in dem Fall, daß das System mit einer Belastung betrieben wird, die geringer als die zulässige Höchstbelastung ist, tiefer liegt als die Stelle, an der das Abwasser dem Fallrohr zugeführt wird, wenn das System mit der zulässigen Höchstbelastung betrieben wird.

2. Verfahren nach Anspruch 1, bei dem das gepumpte Abwasser von der Stelle aus, an der es dem Fallrohr zugeführt wird, in das in dem Fallrohr enthaltene Abwasser frei fallen gelassen wird.

3. Verfahren nach Anspruch 1, bei dem gepumpte Abwasser von der Stelle aus, an der es dem Fallrohr zugeführt wird, durch eine Einrichtung hindurch, die das Mitreißen von Luft verhindert, in das in dem Fallrohr enthaltene Abwasser fällt.

4. Verfahren nach einem der Ansprüche 1 bis 3, bei dem die Stelle, an der das Abwasser dem Fallrohr zugeführt wird, als Reaktion auf eine Veränderung des Abwasserspiegels im Fallrohr verändert wird.

5. Verfahren nach einem der Ansprüche 1 bis 3, bei dem der Abwasserspiegel in dem Fallrohr von der Menge des dem System zugeführten, sauerstoffhaltigen Gases abhängig ist und bei dem die Stelle, an der das Abwasser dem Fallrohr zugeführt wird, als Reaktion auf eine Veränderung der Menge des Gases verändert wird.

6. Vorrichtung zur Behandlung von Abwasser mit einem Fallrohr (1) und einem Steigrohr (2), die an ihren unteren Enden direkt miteinander verbunden sind, einer Einrichtung (6) zur Zuführung eines freien Sauerstoff enthaltenden Gases zu dem Abwasser, während das Abwasser im Fallrohr (1) nach unten strömt, einer Einrichtung (3) zum Heraufpumpen des Abwassers vom Oberteil des Steigrohrs (2) zu dem Fallrohr (1), um in dem Fallrohr (1) einen Abwasserspiegel, der über dem Abwasserspiegel in dem Steigrohr (2) liegt, aufrechtzuerhalten und dadurch ein ausreichendes hydrostatisches Druckgefälle des Abwassers in dem Fallrohr (1) hervorzurufen, um zu bewirken, daß Abwasser mit einer Geschwindigkeit, die ausreicht, um im wesentlichen das ganze Gas, das dem Abwasser zugeführt wird, während das Abwasser im Fallrohr (1) nach unten strömt, mitzureißen, in dem Fallrohr (1) nach unten strömt und in das Steigrohr (2) hineinströmt, wobei das Abwasser durch die Pumpeinrichtung (3) dem Fallrohr (1) an einem über dem Abwasserspiegel im dem Fallrohr (1) befindlichen Niveau

zugeführt wird, und einer Einrichtung, bei der es sich um die Pumpeinrichtung handeln kann und die dazu dient, aus dem Abwasser Gas freizugeben bzw. entweichen zu lassen, bevor das Abwasser zu dem Fallrohr zurückgeführt wird, wobei das Niveau der Stelle, an der das Abwasser dem Fallrohr (1) zugeführt wird, veränderlich ist.

7. Vorrichtung nach Anspruch 6 mit einer Einrichtung, die das Mitreißen von Luft verhindert und durch die hindurch das gepumpte Abwasser von der Stelle aus, an der es dem Fallrohr zugeführt wird, in das in dem Fallrohr enthaltene Abwasser fällt.

8. Vorrichtung nach Anspruch 7, bei der die erwähnte Einrichtung eine Wendelrutsche ist.

9. Vorrichtung nach einem der Ansprüche 6 bis 8, gekennzeichnet durch eine Betätigungseinrichtung, die auf den Abwasserspiegel in dem Fallrohr (1) anspricht, um eine Einrichtung (10) zur Veränderung der Stelle, an der das Abwasser dem Fallrohr (1) zugeführt wird, zu betätigen.

10. Vorrichtung nach einem der Ansprüche 6 bis 8, gekennzeichnet, durch eine Betätigungseinrichtung, die auf die Menge des dem System zugeführten Gases anspricht, um eine Einrichtung (10) zur Veränderung der Stelle, an der das Abwasser dem Fallrohr dem Fallrohr (1) zugeführt wird, zu betätigen.

Fig.1